# EUROPEAN PATENT SPECIFICATION

(11) **EP 4 273 190 B1**
(45) Date of publication and mention of the grant of the patent: **03.06.2026**
(21) Application number: 23170947.8
(22) Date of filing: 02.05.2023
(51) Int. Cl.: B01J 23/06, C08J 11/10, C08J 11/24

(54) **METHOD FOR THE DEPOLYMERIZATION OF A TEREPHTHALATE POLYESTER**
VERFAHREN ZUR DEPOLYMERISATION EINES TEREPHTHALAT-POLYESTERS
PROCÉDÉ DE DÉPOLYMÉRISATION D'UN POLYESTER DE TÉRÉPHTALATE

(30) Priority: 03.05.2022 DE 102022110904; 06.05.2022 LU 102949
(43) Date of publication of application: 08.11.2023
(73) Proprietor: Universität Hamburg, 20148 Hamburg (DE)
(72) Inventor: Alberti, Christoph, 20146 Hamburg (DE); Enthaler, Stephan, 20146 Hamburg (DE)
(74) Representative: Stüven, Ralf

(56) References cited:
- EP-B1- 0 484 963
- GB-A- 802 718
- JP-A- 2002 086 448
- JP-A- 2003 300 915
- US-A- 5 866 622
- HOFMANN MELANIE ET AL: "Zinc(II) acetate Catalyzed Depolymerization of Poly(ethylene terephthalate)", vol. 5, no. 32, 27 August 2020 (2020-08-27), DE, pages 10010 - 10014, XP093012634, ISSN: 2365-6549, Retrieved from the Internet <URL:https://onlinelibrary.wiley.com/doi/full-xml/10.1002/slct.202002260> DOI: 10.1002/slct.202002260

## Description

The invention relates to a method for the depolymerization of a terephthalate polyester.

Terephthalate polyesters, for example polyalkylene terephthalates (PATs), are thermoplastic polymer resins of the polyester family and are commonly used, for example, in the manufacturing of containers for liquids and foods, fibers for clothing, and other articles produced by thermoforming. The most widely used terephthalate polyester, polyethylene terephthalate (PET), is produced on a multi-ton scale (30.5 million tons in 2019) for a wide variety of plastic types, which enable numerous applications due to their physical and mechanical properties and the ease of synthesis.

Nowadays, however, negative aspects of the life cycle of plastics are coming more and more into focus. In particular, the end-of-life area with its established protocols, such as energy recovery, landfill disposal, mechanical recycling or downcycling, is the subject of current discussions. Mechanical recycling of PET is currently a common process to bring the PET plastic back into the reuse cycle. However, the plastic quality of the recycled PET depends very much on the quality of the end-of-life PET used, and the intrinsic properties of the PET, impurities, degradation processes during the life cycle significantly reduce the quality/properties. As a consequence, only a certain proportion of PET can be subjected to mechanical recycling. The remaining amount of PET that does not meet the quality requirements is used for energy recovery and converted into energy (thermal energy, electrical energy) and potentially problematic chemicals such as carbon dioxide. The limited fossil resources and a multi-stage synthesis process are used to manufacture new PET.

Chemical recycling can make an important contribution to solving the PET waste problem. Specifically, in a primary depolymerization step, the end-of-life PET is converted into suitable monomers that can be used in the second part, i.e., repolymerization, to create new PET. Consequently, the chemical functionalities are embedded in a cycle. It is worth mentioning that the monomers obtained in the depolymerization represent the monomers in the industrially established processes based on fossil resources, so that an easy incorporation into established processes is possible. In contrast to mechanical recycling and downcycling, the properties of chemically recycled PET are not linked to the quality of end-of-life PET. In the case of chemical recycling of PET, there are several previously presented approaches for depolymerization (hydrolysis, glycolysis, methanolysis), with methanolytic depolymerization being an advantageous protocol (see, for example, E. Bernard, J. J. Rubio Arias, W. Thielemans, Chemolytic depolymerisation of PET: a review, Green Chem. 2021, 23, 3765-3789; B. Shojaei, M. Abtahi, M. Najafi, Chemical recycling of PET: A stepping-stone toward sustainability. Polym. Adv. Technol. 2020, 31, 2912- 2938; J. Payne, M. D. Jones, The Chemical Recycling of Polyesters for a Circular Plastics Economy: Challenges and Emerging Opportunities, ChemSusChem 2021, 14, 4041; M. Crippa, B. Morico, PET depolymerization: a novel process for plastic waste chemical recycling, In: A. Basile, G. Centi, M. De Falco, G. Iaquaniello G. (eds.), Studies in Surface Science and Catalysis 2020, 179, 215-229; H. Chen, K. Wan, Y. Zhang, Y. Wang, Waste to Wealth: Chemical Recycling and Chemical Upcycling of Waste Plastics for a Great Future, ChemSusChem 2021, 14, 4123).

The earliest report regarding the methanolysis of PET originates from 1958 and describes a batch process wherein the depolymerization is catalyzed by 2 mol% of aromatic sulfonic acids at 200 °C in neat MeOH (GB 806269 A).

US 3321510 A describes a procedure where finely powdered PET is dispersed as an aerosol and reacts with gaseous MeOH. Depending on the catalyst (zinc salts or gaseous HCl) the depolymerization is carried out at 250-300 °C under atmospheric pressure.

A non-catalyzed degradation of PET in supercritical methanol was reported to achieve high yield of both dimethyl terephthalate (DMT) and ethylene glycol (EG) at 200 bar and 250-350 °C, which can reduce the overall energy consumption compared to gaseous methanol (M. Genta, T. Iwaya, M. Sasaki, M. Goto, T. Hirose, Ind. Eng. Che. Res. 2005, 44, 3894-3900; M. Goto, H. Koyamoto, A. Kodama, T. Hirose, S. Nagaoka, J. Phys.: Condens. Matter 2002, 14, 11427-11430; M. Genta, T. Iwaya, M. Sasaki, M. Goto, Waste Mangement 2007, 27, 1167-1177; M. Goto, H. Koyamoto, A. Kodama, T. Hirose, S. Nagaoka, B. J. McCoy, AIChE Journal 2004, 48, 136-144; Y. Yang, Y. Lu, H. Xiang, Y. Xu, Y. Li, Polym. Degrad. Stab. 2002, 75, 185-191; B.-K. Kim, G.-C. Hwang, S.-Y. Bae, S.-C. Yi, H. Kumazawa, J. Appl. Polym. Sci. 2001, 81, 2102-2108). This process was further implemented in a pilot plant (M. Genta, F. Yano, Y. Kondo, W. Matsubara, S. Oomoto, Mitsubishi Heavy Industries Ltd. Technical Review 2003, 40, 1-4).

WO 2011/043515 A1 describes a protocol in which, in a first step, glycolysis to oligomers is carried out. Subsequently, the oligomers are converted to DMT by methanolysis leading to a total reduction of energy consumption compared to conventional methanolysis.

US 3776945 A describes the uncatalyzed reaction of PET with MeOH at 220 °C for 4 h. A rapid distillative removal of the glycols was important to avoid repolymerization.

In a method described in EP 0484963 B1, the methanolysis is carried out in solution without catalyst at 230 °C at up to 15 bar. The yields of EG and DMT varied between 75% and 95%. The yield was improved by converting the main side product methyl 2-hydroxyethyl terephthalate, that remains in solution, in a second reactor to DMT in 90% yield.

GB2041916A describes methanolysis using zinc acetate as a first catalyst, and sodium carbonate, sodium bicarbonate, calcium hydroxide or sodium hydroxide as a second catalyst.

A more recent article introduced Al(O*i*Pr)₃ as catalyst to obtain up to 88% yield for DMT and EG. The reaction temperature could be lowered when 20 vol% of PhCH₃ were used as solvent (H. Kurokawa, M. A. Ohshima, K. Sugiyama, H. Miura, Polym. Degrad. Stab. 2003, 79, 529-533).

Kržan used microwave irradiation to reduce the energy consumption compared to conventional heating. As catalyst, Zn(OAc)₂ was applied and 1,2-propanediol or PEG400 were used as cosolvent. The reaction was run to completeness within only 4 min but no reaction temperature was reported. It was noticed, that the presence of a magnetic stir bar drastically increased heating of the reaction mixture due to its high absorbance of the microwave irradiation (Kržan, J. Appl. Polym. Sci. 1998, 69, 1115-1118).

Siddiqui et al. (2012) reported that, the reaction was carried out under microwave irradiation at 160-200 °C with Zn(OAc)₂ · 2 H₂O as catalyst and the reaction was completed within up to 1 h (M. N. Siddiqui, H. H. Redhwi, D. S. Achilias, J. Appl. Pyrolysis 2012, 98, 214-220).

The depolymerization was also carried out in a continuous flow process between 240-260 °C, which requires extensive equipment (US 3403115 A; EP 0662466 B1).

In a process described in US 5051528 and US 5298530, the PET is partially depolymerized to oligomers as main products. The small amounts of EG and DMT are continuously removed from the reaction mixture by the methanol vapor. The gaseous DMT and EG are then purified by distillation in a second column. This process can be carried out in a continuous fashion. Due to the unavoidable accumulation of contaminations in the reaction chamber, a semi-continuous process is more favorable.

WO 2021/126661 A1 describes the performance of different catalysts for the depolymerization in neat MeOH (20 equiv.). With 10 mol% of either Mg(OMe)₂, NaOMe, Na₂CO₃, DBU or TBD as catalyst, complete dissolution of PET was found. TBD and DBU still caused notable depolymerization at 100 °C. Additionally, different PET sources, either virgin, carpets or bottles were tested.

WO 2021/126939 A1 describes a simplified procedure to remove the EG from the reaction mixture by conversion with dimethyl carbonate to form less reactive cyclic carbonates.

In WO 2021/126936 A1, the gaseous stream of depolymerization products comprising DMT is directly converted by hydrogenation. DMT is converted to either 1,4-cyclohexanedicarboxylate or 1,4-cyclohexanedimethanol, depending on the catalyst.

Recently, using a combination of 20 mol% K₂CO₃ and 50 equiv. of MeOH and CH₂Cl₂, it was possible to achieve yields above 90%. The reaction was carried out under mild conditions between 20-35 °C for 24 h. In this reaction K₂CO₃ serves as a heterogeneous catalyst that is decomposed in the presence of water, causing the formation of hydrolysis products and loss of catalytic activity (D. Dinh Pham, J. Cho, Green Chem. 2021, 23, 511-525).

According to US 10252976 B1 chlorinated solvents show high capability to dissolve PET. A combination of MeOH and CH₂Cl₂ was used to degrade PET in the presence of 15 mol% NaOMe. The reaction was performed within 2-3 h at 20-50 °C. Other solvents for the swelling of PET are mentioned, including DMSO, DMF, acetone, nitrobenzene, benzyl alcohol and benzaldehyde.

US 4163860 describes a different approach, wherein DMT is obtained from PET, and wherein the polymer is first degraded by glycolysis to diglycol terephthalate, using Mg(OAc)₂ · 4 H₂O as catalyst. Overall, the reaction pressure in the degradation step is lower than in conventional methanolytic degradation, as the depolymerization can be carried out in neat glycol. The obtained solution is then mixed with methanol and 0.5 mol% Mg(OMe)₂ as catalyst and heated to 70 °C for 2 h to obtain DMT and glycol. In contrast to the products of glycolysis and hydrolysis, the purification of DMT is easy to accomplish, e.g. by distillation or recrystallization and results in high purity monomers (C. Pudack, M. Stepanski, P. Fässler, Chemie Ingenieur Technik 2020, 92, 452-458). Interestingly, due to its excellent thermal stability and crystallization, it can further be converted with water to TPA, which today is more often the starting material for PET production than DMT (s. Pudack et al. 2020, above).

WO 98/47952 A1 describes a process for recovering polyesters (PET, PBT or PPT) from contaminated polyester waste, using molten dimethyl terephthalate (DMT), methyl-p-toluate (MPT) or dimethyl isophthalate (DMI) as a solvent to dissolve the polyester. Recovered dissolved polyester can subsequently be subjected to methanolysis. Reaction of the mixture over a period of 4 hours at high temperature (290 °C) with continuous addition of methanol for depolymerization is described. No catalyst is used. GB802718A discloses a method for degrading polyethylene terephthalate (PET) to form dimethyl terephthalate (DMT). The method comprises mixing the PET with up to about 0,5 mole eq. of DMT, heating the mixture at a pressure of 10-35 atmospheres gauge to a temperature not exceeding 210 °C in the presence of methanol (30 mole eq. in example 1). A transesterification catalyst in a proportion of 0.5-10% of the weight of the polyethylene terephthalate is also disclosed, such as Zinc acetate. Not disclosed in GB802718A are the use of microwave heating, nor the use of 7,5-12,5 mole eq. of methanol, nor a reaction time of 5-30 minutes. US5866622A discloses a method to recycle a polyester, preferably polyethylene terephthalate, from contaminated polyester waste (i.e. 'end-of-life'), including the use of a polyester solution in dimethylterephthalate (DMT) as a feedstock for methanolysis at 160-250 °C to form DMT and alkylene glycol. US5866622A does not disclose the use of a catalyst, nor the use of microwave heating, nor the use of 7,5-12,5 mole eq. of methanol, nor a reaction time of 5-30 minutes.

There is still a need for methods that make recycling of terephthalate polyesters, in particular PET, more efficient. It is an object of the invention to provide such a method.

In a first aspect, the invention provides a method for the depolymerization of a terephthalate polyester, the terephthalate polyester being a polyethylene terephthalate, PET polymer, or a polybutylene terephthalate, PBT polymer, and the method comprising the steps of: a) contacting the PET or PBT polymer with 7.5-12.5 equivalents of methanol, based on the repeating unit of the PET or PBT polymer, and 0.5-1.25 equivalents of dimethyl terephthalate, DMT, based on the repeating unit of the PET or PBT polymer; andb) heating the mixture of the PET or PBT polymer, methanol and DMT to a temperature of 160-180 °C in the presence of 0.5-1.5 mol % of the catalyst zinc acetate, based on the molar amount of the repeating unit of the PET or PBT polymer in the mixture, wherein the heating is carried out over a period of 5-30 min by means of microwave heating.

The method of the invention provides a method with the help of which polyethylene terephthalate (PET) or a polybutylene terephthalate (PBT) can efficiently be depolymerized, for example to enable a chemical recycling of the polymer. It has surprisingly been found that, in the presence of 0.5-1.25 equivalents of initially added dimethyl terephthalate, DMT, i.e., already at the beginning of the methanolysis of the terephthalate polyester, has several advantages compared to known methanolytic depolymerization methods. As an example, the method of the invention solves the problem of the poor solubility of terephthalate polyesters, e.g., PET, in the depolymerization reagent methanol, so that in prior art methods either a very large amount of methanol or additional solvents (e.g., problematic chlorinated solvents), which then have to be removed separately, have to be used, or long reaction times are necessary. In contrast, the methanolytic depolymerization method of the invention does not require any additional solvents and can be carried out with merely 7.5-12.5 equivalents methanol due to the addition of dimethyl terephthalate at the start of the reaction. This leads to an improved solubility of the terephthalate polyester, for example PAT polymer, in the reaction mixture and significantly reduces the reaction time. At least in case of a recycling of the terephthalate polyester, i.e., subsequent repolymerization, it is also advantageous that the DMT used does not have to be separated from the mixture, because it can be used in the polymerization reaction.

In the method of the invention, the ester functionalities of the terephthalate polyester are converted to dimethyl terephthalate (DMT) and the respective diol HO-R-OH (R is as defined below), for example ethylene glycol (EG) in case of PET, using methanol as a depolymerization reagent and in the presence of a suitable catalyst. Both DMT and the diol are the industrially relevant starting materials for the reverse reaction (polymerization/polycondensation) to synthesize new terephthalate polyester. Furthermore, the methanol used is released again in the polymerization reaction and can be used for further depolymerization steps, so that no waste products are produced during chemical recycling.

The terms "terephthalate polyester" or "terephthalate-based polyester" are used herein for a polymer or co-polymer having a repeating unit composed of terephthalic acid (TPA) and a diol HO-R-OH esterified with the terephthalic acid or transesterified with esters of terephthalic acid, as shown in the following general structure 1

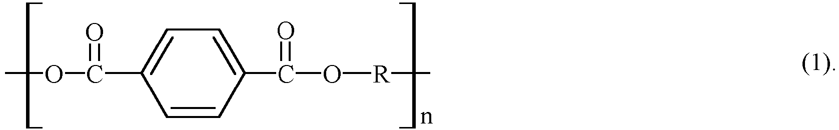

R can be, independently for each occurrence in the polymer, any aliphatic or aromatic compound. R is preferably, independently for each occurrence in the polymer, substituted or unsubstituted alkyl, substituted or unsubstituted cycloalkyl, substituted or unsubstituted cycloalkylene alkyl, i.e., a compound of the structure -R^{1a}-R^{1b}- or -R^{1b}-R^{1a}-, wherein R^{1a} is cycloalkyl and R^{1b} is alkyl, or cycloalkylene dialkyl, i.e., a compound of the structure -R^{1b}-R^{1a}-R^{1c}-, wherein R^{1a} is cycloalkyl and R^{1b} and R^{1c} are, independently from each other, alkyl. An example of a terephthalate polyester wherein R is a cycloalkylene dialkyl is polycyclohexylenedimethylene terephthalate (PCT).

R preferably is substituted or unsubstituted C₁₋₂₀ alkyl, substituted or unsubstituted C₁₋₂₀ cycloalkyl, substituted or unsubstituted C₁₋₂₀ cycloalkylene alkyl, or substituted or unsubstituted C₁₋₂₀ cycloalkylene dialkyl. Further preferred, R is substituted or unsubstituted C₁₋₁₅ alkyl, substituted or unsubstituted C₁₋₁₅ cycloalkyl, substituted or unsubstituted C₁₋₁₅ cycloalkylene alkyl, or substituted or unsubstituted C₁₋₁₅ cycloalkylene dialkyl. Still further preferred, R is substituted or unsubstituted C₁₋₁₀ alkyl, substituted or unsubstituted C₁₋₁₀ cycloalkyl, substituted or unsubstituted C₁₋₁₀ cycloalkylene alkyl, or substituted or unsubstituted C₁₋₁₀ cycloalkylene dialkyl. As mentioned above, R can be the same in each repeating unit or represent different diols esterified with the TPA in the repeating units making up the polymer. The term "polyester" in the terms "terephthalate polyester" and "terephthalate-based polyester" thus encompasses terephthalate copolyesters, i.e., terephthalate polyesters having two or more different diol components. n is, for example, an integer of 20 to 300.

The terms "terephthalate polyester" or "terephthalate-based polyester" encompass the term "polyalkylene terephthalate" (PAT), also poly(alkylene terephthalate), referring to a polymer of the following general structure 1a: 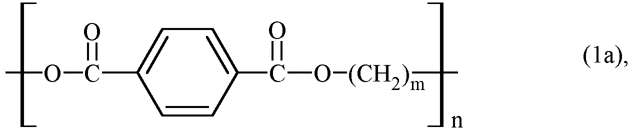 wherein m is 2 to 20, for example m = 2 (in case of polyethylene terephthalate, PET). PATs are polyesters comprising or composed of repeating units of terephthalic acid or dimethyl terephthalate and a corresponding diol HO-(CH₂)ₘ-OH connected to each other by an ester bond. Examples of PATs are polyethylene terephthalate (PET, also poly(ethylene terephthalate), CAS 25038-59-9, m = 2), polypropylene terephthalate (PPT, also poly(propylene terephthalate) or polytrimethylene terephthalate, PTT, CAS 26590-75-0, m = 3) and polybutylene terephthalate (PBT, also poly(butylene terephthalate or Poly(tetramethylene terephthalate), CAS 26062-94-2, m = 4). The general formula 1b below is used to represent PET

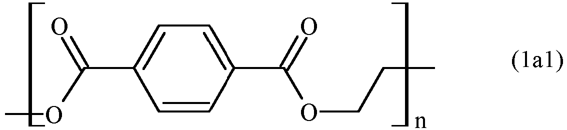

The term "Cₘ₁-Cₘ₂ alkylene terephthalate", for example C₂-C₄ alkylene terephthalate, may be used for a PAT polymer comprising a diol component having m₁ to m₂, e.g., 2 to 4, methylene groups (-CH₂-; see above), m₁ and m₂ being each an integer, and m₂ > m₁. The term C₂-C₄ alkylene terephthalate thus would refer to the PATs PET, PPT and PBT.

As mentioned above, the diol monomer component HO-R-OH can be the same within the polymer, as in PET, for example. It is also possible, however, that the TPA is esterified with different diols, for example in an alternating manner with a first and a second diol, as shown in the general formula 1b below 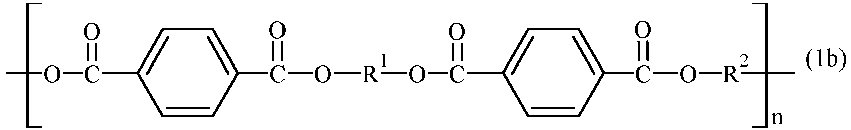 wherein R¹ and R² are different from each other, and are substituted or unsubstituted alkyl or substituted or unsubstituted cycloalkyl, preferably substituted or unsubstituted C₁₋₂₀ alkyl or substituted or unsubstituted C₁₋₂₀ cycloalkyl, or substituted or unsubstituted C₁₋₁₅ alkyl or substituted or unsubstituted C₁₋₁₅ cycloalkyl, or substituted or unsubstituted C₁₋₁₀ alkyl or substituted or unsubstituted C₁₋₁₀ cycloalkyl. An example is a polymer comprising 1,4-cyclohexanedimethanol and 2,2,4,4-tetramethyl-1,3-cyclobutanediol (CBDP) as first and second diol, as shown in formula 1b1 below:

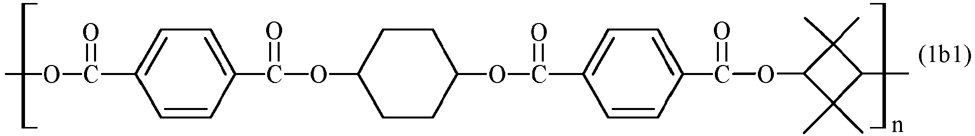

The polymer of formula 1b1 is known as TRITAN^{®}, or PCTT (poly(1,4-cyclohexylenedimethylene-co-2,2,4,4-tetramethyl-1,3-cyclobutanediol terephthalate)).

The terms "a terephthalate polyester" or "a terephthalate-based polyester" are not to be construed as being limited to a single type of a terephthalate polyester having a specific composition. Rather, the terms include mixtures of different terephthalate polyesters.

The terms "terephthalate polyester" or "terephthalate-based polyester" encompass not only any material being a terephthalate polyester but also any material comprising a terephthalate polyester component besides other components. The terms thus not only encompass copolymers, as already mentioned above, but also, for example, composite materials comprising a terephthalate polyester, e.g., fiber-reinforced terephthalate polyesters like carbon- or glass-fiber-reinforced materials.

Unless expressly stated otherwise or unless the context clearly requires otherwise, the term "esterified" in relation to, for example, a repeating unit composed of terephthalic acid (TPA) and a diol HO-R-OH, means that the terephthalic acid and the diol are connected to each other by an ester bond, which ester bond can be a result of the esterification of the TPA and the diol or the result of a transesterification of a TPA-diol ester with a corresponding alcohol.

Terms like "end-of-life terephthalate polyester" or "end-of-life PAT", e.g., "end-of-life PET", refer to terephthalate polyester waste material, i.e., a used and/or aged terephthalate polyester material, for example used and/or aged PAT material or mixture of PAT materials, that would be subjected to a recycling or waste disposal process.

The term "repeating unit" in relation to a terephthalate polyester, e.g., a PET polymer, refers to the combination of respective monomers, of which the polymer is composed, i.e., TPA-diol, and that repeats itself within the polymer (see, for example, the parts in square brackets of the structures in the formulas presented above). Ethylene terephthalate (C₁₀H₈O₄, see formula 1a above), for example, is the repeating unit of PET. Since each repeating unit of a terephthalate polyester includes a single TPA component, a reference to a repeating unit corresponds to a reference to the TPA component in the polymer. The term "monomer" may also be used synonymously for the term "repeating unit". The term "monomer component" may be used for the TPA moiety and the diol moiety of a repeating unit.

A term like "x equivalents of y, based on the repeating unit of the terephthalate polyester" means that y is present or added in a molar amount x times the amount of the repeating unit bound in the terephthalate polyester. An amount of 1.0 equivalents of DMT, based on the repeating unit of the terephthalate polyester, thus means that, for an amount of 5 mol terephthalate polyester repeating unit, e.g., ethylene terephthalate, 5 mol DMT are added or present.

A term like "x mol % of y, based on the repeating unit of the terephthalate polyester" means that, for each mol of repeating unit x % y are used. For example, a presence of 1 mol % of the catalyst zinc acetate (Zn(OAc)₂) means that, in case of a terephthalate polyester with 5 mol repeating unit, e.g., ethylene terephthalate, 1 % percent of 5 mol, i.e., 0.05 mol catalyst are present.

The term "contacting a terephthalate polyester with methanol and dimethyl terephthalate, DMT" encompasses any order in which the three components are brought in contact with each other. The terephthalate polyester may thus be provided in a first step, with the subsequent addition of methanol (MeOH) and DMT, or DMT and MeOH, in a second and/or third step.

Alternatively, DMT and MeOH may be provided in a first step, and the terephthalate polyester may be subsequently added to the mixture of DMT and MeOH. In another alternative, one of DMT or MeOH may be provided in a first step, followed by the terephthalate polyester in a second step and the other of DMT or MeOH in a third step.

The term "catalyst" refers to any substance, compound or material that modifies and/or increases the rate of a chemical reaction without itself undergoing any permanent chemical change in the reaction. The terms "zinc-based catalyst" or "zinc catalyst" refer to a catalyst containing zinc (Zn).

The term "aliphatic compound" comprises cyclic or acyclic linear (straight chain) or branched, saturated or unsaturated carbon compound residues, other than aromatic residues. The term encompasses "heteroaliphatic compounds", i.e., aliphatic residues in whose carbon skeleton one or more C atoms are replaced by heteroatoms, for example oxygen, sulfur, nitrogen or phosphorus.

The terms "aromatic compound" or "aryl" refer to compounds being or comprising chemical groups with aromaticity, including multi-membered aromatic single ring groups and multicyclic systems with at least one aromatic ring. Examples of aryl groups include benzene, phenyl and naphthalene. The term also includes O-, N-, S- or P-aryl groups, i.e., aryl groups bound to a compound via an oxygen, nitrogen, sulfur or phosphorus atom. The terms encompass, for example, groups of the structure alkyl-aryl-alkyl, e.g., - (CH₂)ₙ-aryl-(CH₂)ₘ-, wherein n and m are, for example, independently from each other 1-10.

The term "alkyl" comprises saturated aliphatic (non-aromatic) groups including straight-chain (linear) alkyl groups (e.g. methyl, ethyl, propyl, butyl, pentyl, hexyl, heptyl and octyl), and branched alkyl groups (e.g. isopropyl, tert-butyl, isobutyl). The term also encompasses O, N, S or P alkyl groups (e.g., -O-methyl), i.e. alkyl groups which are bound to a compound via an oxygen, nitrogen, sulfur or phosphorus atom.

The term "cycloalkyl" includes compounds containing an alicyclic group, i.e., a ring-shaped saturated aliphatic (non-aromatic) group, e.g., cyclopropyl, cyclopentyl, cyclohexyl, cycloheptyl, cyclooctyl group.

The term "Cₙ-Cₘ" or "Cₙ₋ₘ", where n and m are each positive integers and m is greater than n, means a range indicating the number of carbon atoms of a compound or residue. The expression here expressly includes all integer intermediate values between the range boundaries n and m, in each case independently of one another. The expression "C₁₋₁₀" (n = 1, m = 10) therefore means, for example, a compound, group or residue having 1-10, i.e., 1, 2, 3, 4, 5, 6, 7, 8, 9 or 10 carbon atoms. "C₁₋₁₀" therefore also comprises, for example, "C₂₋₆", i.e., 2, 3, 4, 5 or 6 carbon atoms, or "C₁₋₄", i.e., 1, 2, 3 or 4 carbon atoms, or "C₄₋₉", i.e., 4, 5, 6, 7, 8 or 9 carbon atoms. Correspondingly, the term "C₁₋₂₀-alkyl" means, for example, an alkyl group having 1, 2, 3, 4, 5, 6, 7, 8, 9, 10, 11, 12, 13, 14, 15, 16, 17, 18 , 19 or 20 carbon atoms and comprises all combinations of the values of n and m, which lie in the range from n = 1 to m = 20, for example "C₁₋₁₀ alkyl", i.e., an alkyl having 1, 2, 3, 4, 5, 6, 7, 8, 9 or 10 carbon atoms, or "C₅₋₇ alkyl", i.e. an alkyl having 5, 6 or 7 carbon atoms.

The term "halogen" or "halide" refers to chlorine (Cl), fluorine (F), bromine (Br) and iodine (I). The term "substituted" means that one or more substituents are present, which replace a hydrogen atom on one or more carbon atoms of the hydrocarbon structure. Examples of such substituents are oxo, hydroxyl, phosphate, cyano, azido and amino groups, but also e.g., halogens (e.g., F, Cl, Br), acyl, acyloxy, alkyl, cycloalkyl, heteroalkyl, heterocycloalkyl, aryl and heteroaryl groups. Instead of the term "substituent" also the term "residue" may be used here.

In a preferred embodiment of the method of the invention the heating of the mixture is preferably carried out in a sealed vessel. The reaction can, for example, be carried out in an autoclave or other reactor. The reactor preferably comprises means for heating a sealable compartment being part of the reactor.

The heating is carried out by means of microwave heating. Preferably, the mixture of the terephthalate polyester, e.g., PAT polymer, methanol and DMT is thus heated in the presence of the catalyst in a sealed vessel placed in a microwave oven. The reaction can, however, also be carried out in an autoclave or other heatable sealed reactor.

In a preferred embodiment of the method of the invention the heating, is carried out over a period of 5-20 min or 10-20 min, particular preferred 20 min.

The catalyst is Zn(OAc)₂. It is to be noted that the terms and chemical formula used above for the catalyst encompass any hydrates or solvates of the compounds. For example, the term "zinc acetate" or the formula Zn(OAc)₂ (= Zn(OOCCH₃)₂) comprises the zinc acetate dihydrate (Zn(OOCCH₃)₂·2H₂O). The catalyst is present in the mixture of the terephthalate polyester, methanol and dimethyl terephthalate before the heating is initiated. The catalyst can be added to the mixture of the terephthalate polyester, methanol and dimethyl terephthalate (DMT), or the mixture of terephthalate polyester, methanol and DMT can be added to the catalyst, or the catalyst can be added after addition of any single component of the mixture, before the start of the heating.

The catalyst s present in the mixture in an amount of 0.5-1.5 mol %, further preferred 1.0 mol %, based on the molar amount of repeating unit of the terephthalate polyester in the mixture.

The terephthalate polyester is, in step a), contacted with 7.5-12.5 equivalents of methanol. particularly preferred 10 equivalents of methanol, based on the repeating unit of the terephthalate polyester, e.g., PAT polymer.

The terephthalate polyester is, in step a), contacted with 0.5-1.25 equivalents of DMT, more preferably 0.75-1.25 equivalents of DMT, particularly preferred 1.0 equivalents of DMT, based on the repeating unit of the terephthalate polyester.

In a particular preferred embodiment of the method of the invention the terephthalate polyester is a PET polymer, wherein the PET polymer is contacted
i) with 7.5-12.5 equivalents of methanol, particularly preferred 10 equivalents of methanol, based on the repeating unit ethylene terephthalate of the PET polymer, and
ii) with 0.5-1.25 equivalents of DMT, more preferably 0.75-1.25 equivalents of DMT, particularly preferred 1.0 equivalents of DMT, based on the repeating unit ethylene terephthalate of the PET polymer,
and wherein the mixture of the PET polymer, methanol and DMT is heated by microwave heating, in the presence of 0.5-1.5 mol %, preferably 1.0 mol %, zinc acetate, based on the molar amount of the repeating unit ethylene terephthalate of the PET polymer in the mixture. The heating s carried out for a period of 5-30 min, preferably 5-20 min or 10-20 min, particular preferred 20 min. In a preferred embodiment of the method of the invention, the heating is carried out under agitation of the mixture to be heated, e.g., agitation by stirring.

In a preferred embodiment of the method of the invention the method further comprises the repolymerization of the polyalkylene terephthalate polymer. This is particular useful for a recycling process in which a new terephthalate polyester is to be synthesized from the products obtained by the depolymerization method of the invention.

In the following, the invention will be described in further detail by way of example only with reference to the accompanying figures.

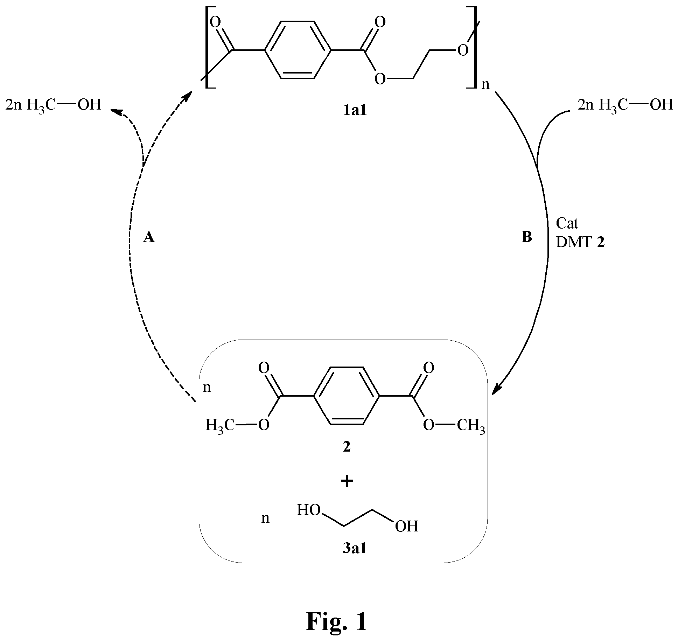

Figure 1. Schematic diagram of an embodiment of the method of the invention.

Figure 1 shows a simplified reaction scheme for a recycling process involving an embodiment of the method of the invention. During methanolytic depolymerization (B, solid arrow) of a terephthalate polyester **1,** polyethylene terephthalate, PET, **1a1** being shown here as an example, in the presence of dimethyl terephthalate (DMT) **2** as a co-solvent and a catalyst (Cat), the ester functionalities of the PET **1a1** are converted to dimethyl terephthalate (DMT) **2** and ethylene glycol **3a1.** The latter compounds are the industrially relevant starting materials for the reverse reaction (polymerization/polycondensation, A, dashed arrow) to get back to new PET **1a.** Furthermore, the methanol used is released again in the polymerization reaction and can be used for the next depolymerization, so that no waste products are produced during chemical recycling.

### Examples

### Example reactions:

A general scheme for a depolymerization reaction carried out in the method of the invention is presented below.

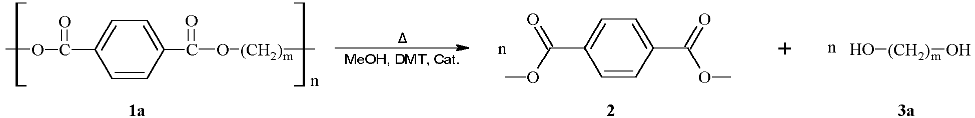

A PAT polymer **1a** is heated in the presence of methanol (MeOH), dimethyl terephthalate (DMT) and a catalyst to yield dimethyl terephthalate (DMT) **2** and the respective alkylene diol **3a.** It is to be noted that DMT **2** is already provided at the beginning of the depolymerization reaction as a co-solvent.

**General:** All chemicals were used as received without further manipulations. ¹H NMR spectra were recorded on a Fourier 300 MHz (¹H: 300 MHz) or Avance I-400 (¹H: 400 MHz) by Bruker, using the proton signals of the deuterated solvents as reference. For microwave heating experiments a Microwave Synthesis Reactor Monowave 400 (Anton Paar GmbH) was used.

The reactions can be also performed in a Parr autoclave (model: 4774) (Parr Instrument Company).

**Example 1:** A mixture of poly(ethylene terephthalate) (**1a1**, transparent bottle) (864.77 mg, 4.5 mmol based on the repeating unit), methanol (10.0 equiv. with respect to the repeating unit of **1a1,** 45 mmol, 1441.8 mg), catalytic amounts of zinc(II) acetate (1.0 mol%, based on the repeating unit of **1a1,** 0.045 mmol, 8.26 mg) and dimethyl terephthalate (0.5 equiv. with respect to the repeating unit of **1a1,** 2.25 mmol, 436.93 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate **(2)** (The yield of **2** was calculated on the basis of the OC*H₃* functions of **2** with respect to the standard). Yield of **2:** >99%.

Dimethyl terephthalate **(2):** ¹H NMR (400 MHz, CDCl₃, 25 °C): δ = 8.06 (s, 4H, Ar-*H*), 3.91 (s, 6H, C*H*₃O-) ppm. Ethylene glycol: ¹H NMR (400 MHz, CDCl₃, 25 °C): δ = 3.65 (s, 4H, C*H*₂O-) ppm.

**Example 2:** A mixture of poly(ethylene terephthalate) (**1a1**, transparent bottle) (864.77 mg, 4.5 mmol based on the repeating unit), methanol (10.0 equiv. with respect to the repeating unit of **1a1,** 45 mmol, 1441.8 mg), catalytic amounts of zinc(II) acetate (1.0 mol%, based on the repeating unit of **1a1,** 0.045 mmol, 8.26 mg) and dimethyl terephthalate (1.5 equiv. with respect to the repeating unit of **1a1,** 6.75 mmol, 1310.78 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to a NMR tube and was dissolved in CDCl₃ (0.6 mL). The sample was subjected to ¹H NMR to determine the yield of dimethyl terephthalate **(2)** (The yield of **2** was calculated on the basis of the OC*H₃* functions of **2** with respect to the standard). Yield of **2:** >99%.

Dimethyl terephthalate **(2):** ¹H NMR (400 MHz, CDCl₃, 25 °C): δ = 8.06 (s, 4H, Ar-*H*), 3.91 (s, 6H, C*H*₃O-) ppm. Ethylene glycol: ¹H NMR (400 MHz, CDCl₃, 25 °C): δ = 3.65 (s, 4H, C*H*₂O-) ppm.

**Example 3:** A mixture of poly(ethylene terephthalate) (**1a1**, transparent bottle) (864.77 mg, 4.5 mmol based on the repeating unit), methanol (10.0 equiv. with respect to the repeating unit of **1a1,** 45 mmol, 1441.8 mg), catalytic amounts of zinc(II) acetate (1.0 mol%, based on the repeating unit of **1a1,** 0.045 mmol, 8.26 mg) and dimethyl terephthalate (0.75 equiv. with respect to the repeating unit of **1a1,** 3.375 mmol, 655.39 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to a NMR tube and was dissolved in CDCl₃ (0.6 mL). The sample was subjected to ¹H NMR to determine the yield of dimethyl terephthalate **(2)** (The yield of **2** was calculated on the basis of the OC*H₃* functions of **2** with respect to the standard). Yield of **2:** 95%.

**Example 4:** A mixture of poly(ethylene terephthalate) (**1a1**, transparent bottle) (864.77 mg, 4.5 mmol based on the repeating unit), methanol (10.0 equiv. with respect to the repeating unit of **1a1,** 45 mmol, 1441.8 mg), catalytic amounts of zinc(II) acetate (1.0 mol%, based on the repeating unit of **1a1,** 0.045 mmol, 8.26 mg) and dimethyl terephthalate (0.25 equiv. with respect to the repeating unit of **1a1,** 1.125 mmol, 218.46 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate **(2)** (The yield of **2** was calculated on the basis of the OC*H₃* functions of **2** with respect to the standard). Yield of **2:** 68%.

**Example 5:** A mixture of poly(ethylene terephthalate) (**1a1**, transparent plastic bottle) (864.77 mg, 4.5 mmol based on the repeating unit), methanol (10.0 equiv. with respect to the repeating unit of **1a1,** 45 mmol, 1441.8 mg), catalytic amounts of zinc(II) acetate (1.0 mol%, based on the repeating unit of **1a1,** 0.045 mmol, 8.26 mg) and dimethyl terephthalate (1.25 equiv. with respect to the repeating unit of **1a1,** 5.625 mmol, 1092.32 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to a NMR tube and was dissolved in CDCl₃ (0.6 mL). The sample was subjected to ¹H NMR to determine the yield of dimethyl terephthalate **(2)** (The yield of **2** was calculated on the basis of the OC*H₃* functions of **2** with respect to the standard). Yield of **2:** 95%.

**Example 6:** A mixture of poly(ethylene terephthalate) (**1a1**, transparent bottle) (864.77 mg, 4.5 mmol based on the repeating unit), methanol (5.0 equiv. with respect to the repeating unit of **1a1,** 22.5 mmol, 720.9 mg), catalytic amounts of zinc(II) acetate (1.0 mol%, based on the repeating unit of **1a1,** 0.045 mmol, 8.26 mg) and dimethyl terephthalate (1.0 equiv. with respect to the repeating unit of **1a1,** 4.5 mmol, 873.86 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate **(2)** (The yield of **2** was calculated on the basis of the OC*H₃* functions of **2** with respect to the standard). Yield of **2:** 82%.

**Example 7:** A mixture of poly(ethylene terephthalate) (**1a1**, transparent bottle) (864.77 mg, 4.5 mmol based on the repeating unit), methanol (15.0 equiv. with respect to the repeating unit of **1a1,** 67.5 mmol, 2162.79 mg), catalytic amounts of zinc(II) acetate (1.0 mol%, based on the repeating unit of **1a1,** 0.045 mmol, 8.26 mg) and dimethyl terephthalate (1.0 equiv. with respect to the repeating unit of **1a1,** 4.5 mmol, 873.86 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of **2:** 98%.

**Example 8:** A mixture of poly(ethylene terephthalate) (**1a1**, transparent bottle) (864.77 mg, 4.5 mmol based on the repeating unit), methanol (10.0 equiv. with respect to the repeating unit of **1a1,** 45.0 mmol, 1441.8 mg), catalytic amounts of zinc(II) acetate (0.5 mol%, based on the repeating unit of **1a1,** 0.0225 mmol, 4.13 mg) and dimethyl terephthalate (1.0 equiv. with respect to the repeating unit of **1a1,** 4.5 mmol, 873.86 mg) was placed with a stir bar in a vial. The vial was sealed and subjected to a Microwave Synthesis Reactor Monowave 400. The reaction was performed for 20 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate **(2)** (The yield of **2** was calculated on the basis of the OC*H₃* functions of **2** with respect to the standard). Yield of **2:** 87%.

**Example 9:** A mixture of poly(ethylene terephthalate) (**1a1**, transparent bottle) (864.77 mg, 4.5 mmol based on the repeating unit), methanol (10.0 equiv. with respect to the repeating unit of **1a1,** 45.0 mmol, 1441.8 mg), catalytic amounts of zinc(II) acetate (1.0 mol%, based on the repeating unit of **1a1,** 0.045 mmol, 8.26 mg) and dimethyl terephthalate (1.0 equiv. with respect to the repeating unit of **1a1,** 4.5 mmol, 873.86 mg) was placed with a stir bar in a vial. The vial was sealed and subjected to a Microwave Synthesis Reactor Monowave 400. The reaction was performed for 20 min (hold time) at 180 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of **2:** >99%.

### General overview of the reactions carried out:

**Table 1. Investigation of reaction parameters - Part 1. The number of the respective example (Ex. #) described above is mentioned in the "Entry" field.**

| 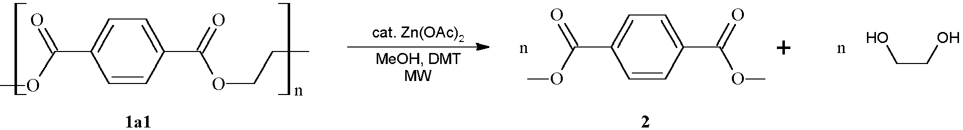 | | | | | | | |
|---|---|---|---|---|---|---|---|
| **Entry** | **Catalyst [mol%]** | **MeOH [equiv.]** | **DMT [equiv.]** | **T [°C]** | **t [min]** | **Yield 2 [%]^{[b]}** | **TOF [h⁻¹]^{[c]}** |
| 1 (Ex. 4) | Zn(OAc)₂ (1.0) | 10.0 | 0.25 | 160 | 20 | 68 | 204 |
| 2 (Ex. 1) | Zn(OAc)₂ (1.0) | 10.0 | 0.5 | 160 | 20 | >99 | 300 |
| 3 (Ex. 3) | Zn(OAc)₂ (1.0) | 10.0 | 0.75 | 160 | 20 | 95 | 285 |
| 4 | Zn(OAc)₂ (1.0) | 10.0 | 1.0 | 160 | 20 | >99 | 300 |
| 5 (Ex. 5) | Zn(OAc)₂ (1.0) | 10.0 | 1.25 | 160 | 20 | 95 | 285 |
| 6 (Ex. 2) | Zn(OAc)₂ (1.0) | 10.0 | 1.5 | 160 | 20 | >99 | 300 |
| 7 (Ex. 6) | Zn(OAc)₂ (1.0) | 5.0 | 1.0 | 160 | 20 | 82 | 246 |
| 8 | Zn(OAc)₂ (1.0) | 7.5 | 1.0 | 160 | 20 | 87 | 261 |
| 9 (Ex. 7) | Zn(OAc)₂ (1.0) | 15.0 | 1.0 | 160 | 20 | 98 | 294 |
| 10 (Ex. 8) | Zn(OAc)₂ (0.5) | 10.0 | 1.0 | 160 | 20 | 87 | 522 |
| 11 | Zn(OAc)₂ (0.25) | 10.0 | 1.0 | 160 | 20 | 81 | 972 |

| | | | | | | | |
|---|---|---|---|---|---|---|---|
| ^{[a]} Reaction conditions: **1a1** (obtained from a transparent bottle, 4.5 mmol with respect to the repeating unit), Zn(OAc)₂ (0.25-1.0 mol%, 0.01-0.045 mmol with respect to the repeating unit of **1a1**), MeOH (5.0-15.0 equiv. with respect to the repeating unit of **1a1**), DMT (0.25-1.5 equiv. with respect to the repeating unit of **1a1**), MW: 160 °C, 20 min. ^{[b]} The yield was determined by ¹H NMR using mesitylene or toluene as standard. It is presumed that the PET product is composed of 100% of PET. ^{[c]} The TOF was calculated: (mol product/mol catalyst)*h⁻¹. The TOF was calculated using the yield of **2** at the designated time. | | | | | | | |

**Table 2. Investigation of reaction parameters - Part 2.**

| 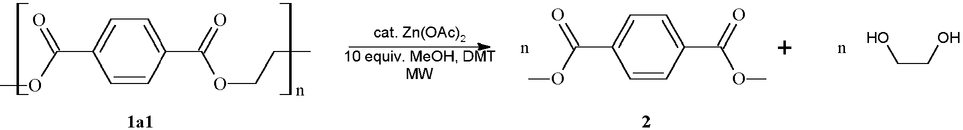 | | | | | | | |
|---|---|---|---|---|---|---|---|
| **Entry** | **Catalyst [mol%]** | **MeOH [equiv.]** | **DMT [equiv.]** | **T [°C]** | **t [min]** | **Yield 2 [%]^{[b]}** | **TOF [h⁻¹]^{[c]}** |
| 1 | Zn(OAc)₂ (1.0) | 10 | 1.0 | 160 | 20 | >99 | 300 |
| 2 (Ex. 9) | Zn(OAc)₂ (1.0) | 10 | 1.0 | 180 | 20 | >99 | 300 |
| 3 | Zn(OAc)₂ (1.0) | 10 | 1.0 | 180 | 5 | 96 | 1152 |
| 4 | Zn(OAc)₂ (0.5) | 10 | 1.0 | 180 | 5 | 91 | 2184 |
| 5 | Zn(OAc)₂ (1.0) | 10 | 1.0 | 140 | 20 | <1 | <1 |
| 6 | Zn(OAc)₂ (1.0) | 10 | 0.75 | 180 | 5 | >99 | 1200 |
| 7 | Zn(OAc)₂ (0.5) | 10 | 0.75 | 180 | 5 | >99 | 2400 |
| 8 | Zn(OAc)₂ (1.0) | 10 | 0.75 | 160 | 30 | >99 | 200 |
| 9 | Zn(OAc)₂ (0.5) | 10 | 0.75 | 160 | 30 | 79 | 316 |

| | | | | | | | |
|---|---|---|---|---|---|---|---|
| ^{[a]} Reaction conditions: **1a1** (obtained from a transparent bottle, 4.5 mmol with respect to the repeating unit), Zn(OAc)₂ (0.5-1.0 mol%, 0.022-0.045 mmol with respect to the repeating unit of **1a1**), MeOH (10.0 equiv. with respect to the repeating unit of **1a1**), DMT (0.75-1.0 equiv. with respect to the repeating unit of **1a1**), MW: 140-180 °C, 5-30 min. ^{[b]} The yield was determined by ¹H NMR using mesitylene or toluene as standard. It is presumed that the PET product is composed of 100% of PET. ^{[c]} The TOF was calculated: (mol product/mol catalyst)*h⁻¹. The TOF was calculated using the yield of **2** at the designated time. | | | | | | | |

**Table 3. Investigation of reaction parameters - Part 3.**

| 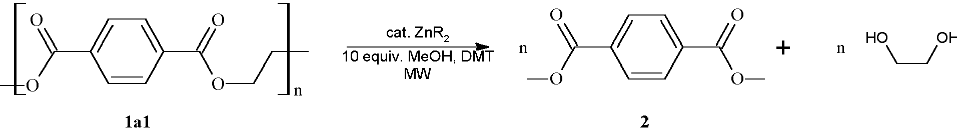 | | | | | | | |
|---|---|---|---|---|---|---|---|
| **Entry** | **Catalyst [mol%]** | **MeOH [equiv.]** | **DMT [equiv.]** | **T [°C]** | **t [min]** | **Yield 2 [%]^{[b]}** | **TOF [h⁻¹]^{[c]}** |
| 1 | Zn(OAc)₂ (1.0) | 10 | 1.0 | 180 | 5 | 96 | 1152 |
| 2 | Zn(OOCH)₂ (1.0) | 10 | 1.0 | 180 | 5 | 87 | 1044 |
| 3 | Zn(MA)₂ (1.0) | 10 | 1.0 | 180 | 5 | 98 | 1176 |
| 4 | ZnCl₂ (1.0) | 10 | 1.0 | 180 | 5 | 60 | 720 |

| | | | | | | | |
|---|---|---|---|---|---|---|---|
| ^{[a]} Reaction conditions: **1a1** (obtained from a transparent bottle, 4.5 mmol with respect to the repeating unit), catalyst (1.0 mol%, 0.045 mmol with respect to the repeating unit of **1a1**), MeOH (10.0 equiv. with respect to the repeating unit of **1a1**), DMT (1.0 equiv. with respect to the repeating unit of **1a1**), MW: 180 °C, 5 min. ^{[b]} The yield was determined by ¹H NMR using mesitylene or toluene as standard. It is presumed that the PET product is composed of 100% of PET. ^{[c]} The TOF was calculated: (mol product/mol catalyst)*h⁻¹. The TOF was calculated using the yield of **2** at the designated time. | | | | | | | |

**Table 4. Application of the depolymerization to different end-of-life PET products.**

| 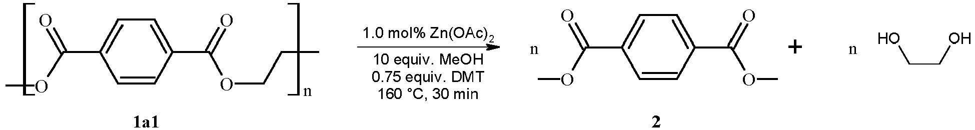 | | |
|---|---|---|
| **Entry** | **PET product** | **Yield 2 [%]^{[b]}** |
| 1 | Transparent bottle (colourless) **1a1-a** | >99 |
| 2 | Transparent Cola bottle with rPET **1a1-b** | 96 |
| 3 | Transparent bottle (green) **1a1-c** | >99 |
| 4 | Transparent bottle (brown) **1a1-d** | >99 |
| 5 | Milk bottle (white) **1a1-e** | >99 |
| 6 | Detergent bottle (purple) **1a1-f** | >99 |
| 7 | Transparent fruit box **1a1-g** | >99 |
| 8 | Transparent box **1a1-h** | >99 |
| 9 | Shampoo bottle (grey) **1a1-i** | 94 |
| 10 | Dish detergent bottle with rPET **1a1-j** | >99 |
| 11 | Detergent bottle (yellow) **1a1-k** | >99 |
| 12 | Safety vest (neon yellow) **1a1-l** | 56 |
| 13 | Sport T-Shirt (orange) **1a1-m** | 98 |
| 14 | Yarn (black) **1a1-n** | >99 |

| | | |
|---|---|---|
| ^{[a]} Reaction conditions: **1a1** (4.5 mmol with respect to the repeating unit), Zn(OAc)₂ (1.0 mol%, 0.045 mmol with respect to the repeating unit of **1a1**), MeOH (10.0 equiv. with respect to the repeating unit of **1a1**), DMT (0.75 equiv. with respect to the repeating unit of **1a1**), MW: 160 °C, 30 min. ^{[b]} The yield was determined by ¹H NMR using mesitylene or toluene as standard. It is presumed that the PET product is composed of 100% of PET. ^{[c]} The TOF was calculated: (mol product/mol catalyst)*h⁻¹. The TOF was calculated using the yield of **2** at the designated time. | | |

### Selected example reactions with isolation of DMT:

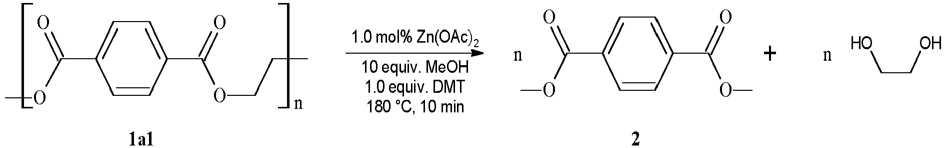

**Example 10:** A mixture of poly(ethylene terephthalate) (**1a1-c,** transparent green bottle) (4323.83 mg, 22.5 mmol based on the repeating unit), methanol (10.0 equiv. with respect to the repeating unit of **1a1-c,** 225.0 mmol, 7209.0 mg), catalytic amounts of zinc(II) acetate (1.0 mol%, based on the repeating unit of **1a-c,** 0.225 mmol, 41.51 mg) and dimethyl terephthalate (1.0 equiv. with respect to the repeating unit of **1a-c,** 22.5 mmol, 4369.28 mg) was placed with a stir bar in a vial. The vial was sealed and subjected to a Microwave Synthesis Reactor Monowave 400. The reaction was performed for 10 min (hold time) at 180 °C and stirring with 600 rpm. The reaction temperature was reached within 3 minutes. Afterwards the vial was cooled to room temperature. For determination of the yield the mixture was transferred to a flask and methanol (70 mL) was added. The mixture was refluxed until the DMT was dissolved. Afterwards the mixture was cooled to room temperature and the crystals of DMT were filtered off and washed with small amounts of cold methanol. The crystals were dried in vacuum. Isolated yield of **2:** 45% (1. crop). In the mother liquor significant amounts of DMT and EG were detected.

**Example 11:** A mixture of poly(ethylene terephthalate) (**1a1-d**, brown bottle) (4323.83 mg, 22.5 mmol based on the repeating unit), methanol (10.0 equiv. with respect to the repeating unit of **1a1,** 225.0 mmol, 7209.0 mg), catalytic amounts of zinc(II) acetate (1.0 mol%, based on the repeating unit of **1a1-d,** 0.225 mmol, 41.51 mg) and dimethyl terephthalate (1.0 equiv. with respect to the repeating unit of **1a1-d,** 22.5 mmol, 4369.28 mg) was placed with a stir bar in a vial. The vial was sealed and subjected to a Microwave Synthesis Reactor Monowave 400. The reaction was performed for 10 min (hold time) at 180 °C and stirring with 600 rpm. The reaction temperature was reached within 3 minutes. Afterwards the vial was cooled to room temperature. For determination of the yield the mixture was transferred to a flask and methanol (70 mL) was added. The mixture was refluxed until the DMT was dissolved. Afterwards the mixture was cooled to room temperature and the crystals of DMT were filtered off and washed with small amounts of cold methanol. The crystals were dried in vacuum. Isolated yield of 2: 73% (1. crop). In the mother liquor significant amounts of DMT and EG were detected.

**Example 12:** A mixture of poly(ethylene terephthalate) (**1a1-g,** transparent packaging for fruits) (4323.83 mg, 22.5 mmol based on the repeating unit), methanol (10.0 equiv. with respect to the repeating unit of **1a1-g,** 225.0 mmol, 7209.0 mg), catalytic amounts of zinc(II) acetate (1.0 mol%, based on the repeating unit of **1a1-g,** 0.225 mmol, 41.51 mg) and dimethyl terephthalate (1.0 equiv. with respect to the repeating unit of **1a1-g,** 22.5 mmol, 4369.28 mg) was placed with a stir bar in a vial. The vial was sealed and subjected to a Microwave Synthesis Reactor Monowave 400. The reaction was performed for 10 min (hold time) at 180 °C and stirring with 600 rpm. The reaction temperature was reached within 3 minutes. Afterwards the vial was cooled to room temperature. For determination of the yield the mixture was transferred to a flask and methanol (70 mL) was added. The mixture was refluxed until the DMT was dissolved. Afterwards the mixture was cooled to room temperature and the crystals of DMT were filtered off and washed with small amounts of cold methanol. The crystals were dried in vacuum. Isolated yield of 2: 85% (1. Crop). In the mother liquor significant amounts of DMT and EG were detected.

**Example 13:** A mixture of poly(ethylene terephthalate) (**1a1-m,** orange T-Shirt) (4323.83 mg, 22.5 mmol based on the repeating unit), methanol (10.0 equiv. with respect to the repeating unit of **1a1-m,** 225.0 mmol, 7209.0 mg), catalytic amounts of zinc(II) acetate (1.0 mol%, based on the repeating unit of **1a1-m,** 0.225 mmol, 41.51 mg) and dimethyl terephthalate (1.0 equiv. with respect to the repeating unit of **1a1-m,** 22.5 mmol, 4369.28 mg) was placed with a stir bar in a vial. The vial was sealed and subjected to a Microwave Synthesis Reactor Monowave 400. The reaction was performed for 10 min (hold time) at 180 °C and stirring with 600 rpm. The reaction temperature was reached within 3 minutes. Afterwards the vial was cooled to room temperature. For determination of the yield the mixture was transferred to a flask and methanol (70 mL) was added. The mixture was refluxed until the DMT was dissolved. Afterwards the mixture was cooled to room temperature and the crystals of DMT were filtered off and washed with small amounts of cold methanol. The crystals were dried in vacuum. Isolated yield of **2:** 82% (1. crop). In the mother liquor significant amounts of DMT and EG were detected.

**Example 14:** A mixture of poly(ethylene terephthalate) (**1a1-o,** microfiber cloth with 17% polyamide) (4323.83 mg, 22.5 mmol based on the repeating unit), methanol (10.0 equiv. with respect to the repeating unit of **1a1-o,** 225.0 mmol, 7209.0 mg), catalytic amounts of zinc(II) acetate (1.0 mol%, based on the repeating unit of **1a1-o,** 0.225 mmol, 41.51 mg) and dimethyl terephthalate (1.0 equiv. with respect to the repeating unit of **1a1-o,** 22.5 mmol, 4369.28 mg) was placed with a stir bar in a vial. The vial was sealed and subjected to a Microwave Synthesis Reactor Monowave 400. The reaction was performed for 10 min (hold time) at 180 °C and stirring with 600 rpm. The reaction temperature was reached within 3 minutes. Afterwards the vial was cooled to room temperature. For determination of the yield the mixture was transferred to a flask and methanol (70 mL) was added. The mixture was refluxed until the DMT was dissolved. Afterwards the mixture was cooled to room temperature and the crystals of DMT were filtered off and washed with small amounts of cold methanol. The crystals were dried in vacuum. Isolated yield of 2: 71% (1. crop). In the mother liquor significant amounts of DMT and EG were detected.

**Example 15:** A mixture of poly(ethylene terephthalate) (**1a1-p,** PET mixture with paper, foils, glue, dyes) (4323.83 mg, 22.5 mmol based on the repeating unit), methanol (10.0 equiv. with respect to the repeating unit of **1a1-p,** 225.0 mmol, 7209.0 mg), catalytic amounts of zinc(II) acetate (1.0 mol%, based on the repeating unit of **1a1-p,** 0.225 mmol, 41.51 mg) and dimethyl terephthalate (1.0 equiv. with respect to the repeating unit of **1a1-p,** 22.5 mmol, 4369.28 mg) was placed with a stir bar in a vial. The vial was sealed and subjected to a Microwave Synthesis Reactor Monowave 400. The reaction was performed for 10 min (hold time) at 180 °C and stirring with 600 rpm. The reaction temperature was reached within 3 minutes. Afterwards the vial was cooled to room temperature. For determination of the yield the mixture was transferred to a flask and methanol (70 mL) was added. The mixture was refluxed until the DMT was dissolved. Afterwards the mixture was cooled to room temperature and the crystals of DMT were filtered off and washed with small amounts of cold methanol. The crystals were dried in vacuum. Isolated yield of **2:** 14% (1. crop). In the mother liquor significant amounts of DMT and EG were detected.

**Example 16:** A mixture of poly(ethylene terephthalate) (**1a1-a,** transparent bottle) (4323.83 mg, 22.5 mmol based on the repeating unit), poly(ethylene) (10 wt% with respect to **1a1-a**) methanol (10.0 equiv. with respect to the repeating unit of **1a1-a,** 225.0 mmol, 7209.0 mg), catalytic amounts of zinc(II) acetate (1.0 mol%, based on the repeating unit of **1a1-a,** 0.225 mmol, 41.51 mg) and dimethyl terephthalate (1.0 equiv. with respect to the repeating unit of **1a1-a,** 22.5 mmol, 4369.28 mg) was placed with a stir bar in a vial. The vial was sealed and subjected to a Microwave Synthesis Reactor Monowave 400. The reaction was performed for 10 min (hold time) at 180 °C and stirring with 600 rpm. The reaction temperature was reached within 3 minutes. Afterwards the vial was cooled to room temperature. For determination of the yield the mixture was transferred to a flask and methanol (70 mL) was added. The mixture was refluxed until the DMT was dissolved. Afterwards the mixture was cooled to room temperature and the crystals of DMT were filtered off and washed with small amounts of cold methanol. The crystals were dried in vacuum. Isolated yield of 2: 94% (1. crop). In the mother liquor significant amounts of DMT and EG were detected.

**Example 17:** A mixture of poly(ethylene terephthalate) (**1a1**, mixture of PET) (29.79 g, 0.155 mol based on the repeating unit), methanol (10.0 equiv. with respect to the repeating unit of **1a1,** 1.55 mol, 49.66 g), catalytic amounts of zinc(II) acetate (1.0 mol%, based on the repeating unit of **1a1,** 0.002 mol, 0.28 g) and dimethyl terephthalate (1.0 equiv. with respect to the repeating unit of **1a1,** 0.116 mol, 291.3 g) was placed with a stir bar in an 160 mL autoclave. The autoclave was sealed. The reaction was performed for 30 min (hold time) at 160 °C and stirring with 600 rpm. Afterwards the autoclave was cooled to room temperature. An aliquot of the mixture was transferred to a NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of **2:** 73%.

### Selected example reactions with other PATs or PET compounds:

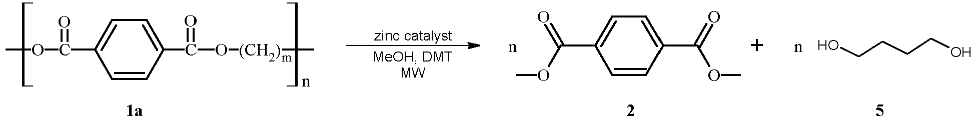

**Example 18:** A mixture of poly(butylene terephthalate) (PBT, pellets) (990.9 mg, 4.5 mmol based on the repeating unit), methanol (10.0 equiv. with respect to the repeating unit of PBT, 45 mmol, 1441.8 mg), catalytic amounts of zinc(II) acetate (1.0 mol%, based on the repeating unit of PBT, 0.045 mmol, 8.26 mg) and dimethyl terephthalate (1.0 equiv. with respect to the repeating unit of PBT, 4.5 mmol, 873.85 mg) was placed with a stir bar in a vial. The vial was sealed and subjected to a Microwave Synthesis Reactor Monowave 400. The reaction was performed for 30 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of 2: 95%.

**Example 19:** A mixture of poly(butylene terephthalate) (PBT, pellets) (990.9 mg, 4.5 mmol based on the repeating unit), methanol (10.0 equiv. with respect to the repeating unit of PBT, 45 mmol, 1441.8 mg), catalytic amounts of zinc(II) acetate (1.0 mol%, based on the repeating unit of PBT, 0.045 mmol, 8.26 mg) and dimethyl terephthalate (0.25 equiv. with respect to the repeating unit of PBT, 1.125 mmol, 218.46 mg) was placed with a stir bar in a vial. The vial was sealed and subjected to a Microwave Synthesis Reactor Monowave 400. The reaction was performed for 10 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of **2:** 59%.

**Example 20:** A mixture of poly(butylene terephthalate) (PBT, pellets) (990.9 mg, 4.5 mmol based on the repeating unit), methanol (10.0 equiv. with respect to the repeating unit of PBT, 45 mmol, 1441.8 mg), catalytic amounts of zinc(II) acetate (1.0 mol%, based on the repeating unit of PBT, 0.045 mmol, 8.26 mg) and dimethyl terephthalate (1.0 equiv. with respect to the repeating unit of PBT, 4.5 mmol, 873.85 mg) was placed with a stir bar in a vial. The vial was sealed and subjected to a Microwave Synthesis Reactor Monowave 400. The reaction was performed for 10 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of **2:** 91%.

**Example 21:** A mixture of poly(butylene terephthalate) (PBT, pellets) (990.9 mg, 4.5 mmol based on the repeating unit), methanol (10.0 equiv. with respect to the repeating unit of PBT, 45 mmol, 1441.8 mg), catalytic amounts of zinc(II) acetate (1.0 mol%, based on the repeating unit of PBT, 0.045 mmol, 8.26 mg) and dimethyl terephthalate (0.75 equiv. with respect to the repeating unit of PBT, 3.375 mmol, 655.39 mg) was placed with a stir bar in a vial. The vial was sealed and subjected to a Microwave Synthesis Reactor Monowave 400. The reaction was performed for 2.5 min (hold time) at 180 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of **2:** 83%.

**Example 22:** A mixture of poly(butylene terephthalate) (PBT, pellets) (990.9 mg, 4.5 mmol based on the repeating unit), methanol (10.0 equiv. with respect to the repeating unit of PBT, 45 mmol, 1441.8 mg), catalytic amounts of zinc(II) formate (1.0 mol%, based on the repeating unit of PBT, 0.045 mmol, 6.99 mg) and dimethyl terephthalate (0.75 equiv. with respect to the repeating unit of PBT, 3.375 mmol, 655.39 mg) was placed with a stir bar in a vial. The vial was sealed and subjected to a Microwave Synthesis Reactor Monowave 400. The reaction was performed for 30 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to an NMR tube and was dissolved in CDCl₃ (0.6 mL). The sample was subjected to ¹H NMR to determine the yield of dimethyl terephthalate (**2**) (The yield of **2** was calculated on the basis of the OC*H₃* functions of **2** with respect to the standard). Yield of **2:** 95%.

**Table 5. Investigation of reaction parameters for PBT depolymerization - Part 1. The number of the respective example (Ex. #) described above is mentioned in the "Entry" field.**

| 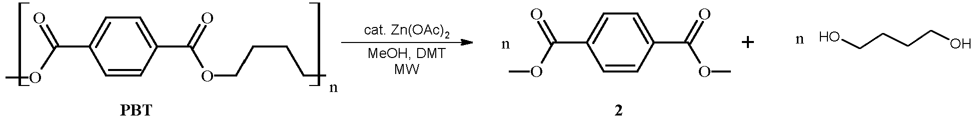 | | | | | | | |
|---|---|---|---|---|---|---|---|
| **Entry** | **Catalyst [mol%]** | **MeOH [equiv.]** | **DMT [equiv.]** | **T [°C]** | **t [min]** | **Yield 2 [%]^{[b]}** | **TOF [h⁻¹]^{[c]}** |
| 1 (Ex. 19) | Zn(OAc)₂ (1.0) | 10.0 | 0.25 | 160 | 10 | 59 | 354 |
| 2 | Zn(OAc)₂ (1.0) | 10.0 | 0.5 | 160 | 10 | 72 | 432 |
| 3 | Zn(OAc)₂ (1.0) | 10.0 | 0.75 | 160 | 10 | 85 | 510 |
| 4 (Ex. 20) | Zn(OAc)₂ (1.0) | 10.0 | 1.0 | 160 | 10 | 91 | 546 |
| 5 | Zn(OAc)₂ (1.0) | 7.5 | 0.75 | 160 | 10 | 77 | 462 |
| 6 | Zn(OAc)₂ (1.0) | 5.0 | 0.75 | 160 | 10 | 69 | 414 |
| 7 (Ex. 18) | Zn(OAc)₂ (1.0) | 10.0 | 1.0 | 160 | 30 | 95 | 190 |
| 8 | Zn(OAc)₂ (0.5) | 10.0 | 1.0 | 160 | 30 | >99 | 600 |
| 9 | Zn(OAc)₂ (0.25) | 10.0 | 1.0 | 160 | 30 | 92 | 1104 |

| | | | | | | | |
|---|---|---|---|---|---|---|---|
| ^{[a]} Reaction conditions: PBT (4.5 mmol with respect to the repeating unit), Zn(OAc)₂ (0-1 mol%, 0-0.045 mmol with respect to the repeating unit of PBT), MeOH (5.0-10.0 equiv. with respect to the repeating unit of PBT), DMT (0.25-1.0 equiv. with respect to the repeating unit of PBT), MW: 160 °C, 10-30 min. ^{[b]} The yield was determined by ¹H NMR using mesitylene or toluene as standard. It is presumed that the PBT product is composed of 100% of PBT. ^{[c]} The TOF was calculated: (mol product/mol catalyst)*h⁻¹. The TOF was calculated using the yield of 2 at the designated time. | | | | | | | |

**Example 23:** A mixture of glass fiber reinforced poly(ethylene terephthalate) (PET-GF, black lamp socket) (864.77 mg, 4.5 mmol based on the repeating unit, for simplicity it was assumed that the whole materials only contains PET-GF), methanol (10.0 equiv. with respect to the repeating unit of PET-GF, 45 mmol, 1441.8 mg), catalytic amounts of zinc(II) acetate (1.0 mol%, based on the repeating unit of PET-GF, 0.045 mmol, 8.26 mg) and dimethyl terephthalate (0.75 equiv. with respect to the repeating unit of PET, 3.375 mmol, 655.39 mg) was placed with a stir bar in a vial. The vial was sealed and subjected to a Microwave Synthesis Reactor Monowave 400. The reaction was performed for 30 min (hold time) at 160 °C and stirring with 600 rpm. The reaction temperature was reached within 3 minutes. Afterwards the vial was cooled to room temperature. For determination of the yield toluene was added as standard and the mixture was dissolved in dichloromethane. An aliquot of the solution was transferred to a NMR tube and was dissolved in CDCl₃ (0.6 mL). The sample was subjected to ¹H NMR to determine the yield of dimethyl terephthalate (2) (The yield of 2 was calculated on the basis of the OC*H₃* functions of **2** with respect to the standard). Yield of **2:** 78%.

## Claims

1. A method for the depolymerization of a terephthalate polyester, the terephthalate polyester being a polyethylene terephthalate, PET polymer, or a polybutylene terephthalate, PBT polymer, and the method comprising the steps of:
a) contacting the PET or PBT polymer with 7.5-12.5 equivalents of methanol, based on the repeating unit of the PET or PBT polymer, and 0.5-1.25 equivalents of dimethyl terephthalate, DMT, based on the repeating unit of the PET or PBT polymer; and
b) heating the mixture of the PET or PBT polymer, methanol and DMT to a temperature of 160-180 °C in the presence of 0.5-1.5 mol % of the catalyst zinc acetate, based on the molar amount of the repeating unit of the PET or PBT polymer in the mixture, wherein the heating is carried out over a period of 5-30 min by means of microwave heating.

2. The method according to claim 1, wherein the PET or PBT polymer provided in step a) is an end-of-life PET or PBT polymer.

3. The method according to one of claims 1 or 2, wherein the heating is carried out over a period of 5-20 min or 10-20 min, particular preferred 20 min.

4. The method according to one of the preceding claims, wherein the PET or PBT polymer is contacted with 10 equivalents of methanol, based on the repeating unit of the PET or PBT polymer.

5. The method according to one of the preceding claims, further comprising the repolymerization of the terephthalate polyester.

## Patentansprüche

1. Verfahren zur Depolymerisation eines Terephthalatpolyesters, wobei der Terephthalatpolyester ein Polyethylenterephthalat, PET-Polymer, oder ein Polybutylenterephthalat, PBT-Polymer, ist, und wobei das Verfahren die folgenden Schritte umfasst:
a) Kontaktieren des PET- oder PBT-Polymers mit 7,5-12,5 Äquivalenten Methanol, basierend auf der Wiederholungseinheit des PET- oder PBT-Polymers, und 0,5-1,25 Äquivalenten Dimethylterephthalat, DMT, basierend auf der Wiederholungseinheit des PET- oder PBT-Polymers; und
b) Erhitzen der Mischung aus dem PET- oder PBT-Polymer, Methanol und DMT auf eine Temperatur von 160-180 °C in Gegenwart von 0,5-1,5 Mol-% des Katalysators Zinkacetat, bezogen auf die molare Menge der Wiederholungseinheit des PET- oder PBT-Polymers in der Mischung, wobei das Erhitzen über einen Zeitraum von 5-30 Min. mittels Mikrowellenerhitzung durchgeführt wird.

2. Verfahren nach Anspruch 1, wobei das in Schritt a) bereitgestellte PET- oder PBT-Polymer ein PET- oder PBT-Polymer am Ende seiner Lebensdauer ist.

3. Verfahren nach einem der Ansprüche 1 oder 2, wobei das Erhitzen über einen Zeitraum von 5-20 Min. oder 10-20 Min., besonders bevorzugt 20 Min., durchgeführt wird.

4. Verfahren nach einem der vorstehenden Ansprüche, wobei das PET- oder PBT-Polymer mit 10 Äquivalenten Methanol, basierend auf der Wiederholungseinheit des PET- oder PBT-Polymers, kontaktiert wird.

5. Verfahren nach einem der vorstehenden Ansprüche, ferner umfassend die Repolymerisation des Terephthalatpolyesters.

## Revendications

1. Procédé pour la dépolymérisation d'un polyester téréphtalate, le polyester téréphtalate étant un polymère de poly(téréphtalate de pétrole), PET, ou un polymère de poly(téréphtalate de butylène), PBT, et le procédé comprenant les étapes consistant à :
a) mettre en contact le polymère PET ou PBT avec 7,5 à 12,5 équivalents de méthanol, sur la base du motif de répétition du polymère PET ou PBT, et 0,5 à 1,25 équivalent de téréphtalate de diméthyle, DMT, sur la base du motif de répétition du polymère PET ou PBT ; et
b) le chauffage du mélange du polymère PET ou PBT, de méthanol et de DMT à une température de 160 à 180 °C en présence de 0,5 à 1,5 % en moles du catalyseur acétate de zinc, sur la base de la quantité molaire du motif de répétition du polymère PET ou PBT dans le mélange, dans lequel le chauffage est effectué sur une période de 5 à 30 min au moyen d'un chauffage par micro-ondes.

2. Procédé selon la revendication 1, dans lequel le polymère PET ou PBT fourni à l'étape a) est un polymère PET ou PBT en fin de vie.

3. Procédé selon l'une des revendications 1 ou 2, dans lequel le chauffage est effectué sur une période de 5 à 20 min ou de 10 à 20 min, particulièrement de préférence 20 min.

4. Procédé selon l'une des revendications précédentes, dans lequel le polymère PET ou PBT est mis en contact avec 10 équivalents de méthanol, sur la base du motif de répétition du polymère PET ou PBT.

5. Procédé selon l'une des revendications précédentes, comprenant en outre la repolymérisation du polyester téréphtalate.
